# EUROPÄISCHE PATENTSCHRIFT

(11) **EP 0 762 414 B1**
(45) Veröffentlichungstag und Bekanntmachung des Hinweises auf die Patenterteilung: **17.11.1999**
(21) Anmeldenummer: 96202365.1
(22) Anmeldetag: 26.08.1996
(51) Int. Cl.: G11B 15/44

(54) **Magnetbandkassettengerät mit einem Laufwerk für Magnetbandkassetten**
Magnetic tape apparatus with a drive unit for magnetic tape cassettes
Appareil à cassette à bande magnétique avec un dispositif d'entraînement pour cassettes à bande magnétique

(30) Priorität: 02.09.1995 DE 19532524
(43) Veröffentlichungstag der Anmeldung: 12.03.1997
(73) Patentinhaber: Philips Patentverwaltung GmbH, 22335 Hamburg (DE); Koninklijke Philips Electronics N.V., 5621 BA Eindhoven (NL)
(72) Erfinder: Kunze, Norbert, c/o Philips Patentverwaltung GmbH, 22335 Hamburg (DE); Müller, Dieter, c/o Philips Patentverwaltung GmbH, 22335 Hamburg (DE)
(74) Vertreter: von Laue, Hanns-Ulrich, Dipl.-Ing.

(56) Entgegenhaltungen:
- EP-A- 0 587 234
- DE-A- 3 107 626
- DE-A- 4 032 986
- GB-A- 2 197 979

## Beschreibung

Die Erfindung betrifft ein Magnetbandkassettengerät mit einem Laufwerk für Magnetbandkassetten, das für Spiel- und Schnellspulbetrieb in Vorwärts- und Rückwärtsrichtung eingerichtet ist, wobei die Umschaltung zwischen Vorwärts- und Rückwärtsrichtung mittels eines Umschaltmechanismus erfolgt, der im Spiel- und Schnellspulbetrieb die Laufwerksrichtung umkehrt, mit
- einem Magnetkopf, der im Spielbetrieb am Magnetband anliegt und für das Erfassen von Aufzeichnungen in zwei Gruppen von Aufzeichnungsspuren des Magnetbandes zwei Gruppen von Kanälen aufweist,
- einem Schaltglied, das von einem Zustand in einen anderen umschaltbar ist, um die eine oder andere Gruppe der Kanäle im Magnetkopf in Wirkung zu setzen,
- einem Schnellspulmechanismus mit mindestens einer Schnellauftaste,
- einer Musiksuchlaufschaltung, welche eine Pause bestimmter Minimaldauer in einer Gruppe der Aufzeichnungsspuren des Magnetbandes detektiert.

Bei Magnetbandkassettengeräten, die in Vorwärts- und Rückwärtsrichtung betrieben werden können, ist es üblich, von einer Gruppe von Kanälen des Magnetkopfes auf die andere Gruppe von Kanälen umzuschalten, wenn die Spielrichtung geändert wird. Dies verträgt sich nicht mit einem Musiksuchlaufsystem, das während des schnellen Rücklaufs oder schnellen Vorlaufs des Bandes die Pausen zwischen auf dem Magnetband vorhandenen Aufzeichnungen feststellt. In einem derartigen System müssen die im Einsatz befindlichen Kanäle des Magnetkopfes mit den ausgewählten Aufzeichnungsspuren des Magnetbandes übereinstimmen, gleichgültig welche Richtung das Magnetband im Schnellspulbetrieb hat.
In der DE 31 07 626 ist ein Magnetbandkassettengerät beschrieben, welches das oben beschriebene Problem durch Verbindungsmittel zum Verbinden des Umkehrmechanismus für den Zweirichtungsantrieb mit dem Schaltglied und durch Mittel, durch welche diese Verbindungsmittel abkoppelbar sind, löst. Eine derartige Realisierung ist jedoch sehr aufwendig, da die Verbindungsmittel und die Abkoppelmittel als zusätzliche mechanische Komponenten realisiert werden müssen.

Es ist Aufgabe der Erfindung, für ein Magnetbandkassettengerät der eingangs genannten Art eine Möglichkeit zu schaffen, welche den Einsatz eines Musiksuchlaufsystems mit einem Minimum an zusätzlichen Komponenten und Kosten erlaubt.

Diese Aufgabe ist erfindungsgemäß dadurch gelöst,
- daß das Schaltglied derart ausgebildet ist, daß es ohne äußere Einwirkung einen der beiden Zustände als Vorzugsstellung einnimmt,
- daß der Umschaltmechanismus mittels eines Betätigungselementes das Schaltglied beim Übergang von der einen Richtung im Spielbetrieb in die andere Richtung im Spielbetrieb von der Vorzugsstellung in eine Nebenstellung umschaltet,
- daß der Schnellspulmechanismus ein Feststellelement aufweist, welches das Schaltglied im Schnellspulbetrieb in der Nebenstellung festsetzt, wenn das Schaltglied vor dem Betätigen des Schnellspulmechanismus die Nebenstellung eingenommen hat.

Befindet sich das Schaltglied in der Vorzugsstellung, so ist eine der beiden Gruppen der Kanäle des Magnetkopfes eingeschaltet, beispielsweise die Kanalgruppe für die Vorwärtsspielrichtung. Wenn das Laufwerk nun in die Rückwärtsspielrichtung umgeschaltet wird, so wird das Schaltglied mittels eines Betätigungselementes des Umschaltmechanismus von der Vorzugsstellung in die Nebenstellung umgeschaltet und damit die Kanalgruppe für die Rückwärtsspielrichtung im Magnetkopf eingeschaltet. Der Schnellspulmechanismus ist so ausgeführt, daß die Kanalgruppe, die vor dem Betätigen des Schnellspulmechanismus eingeschaltet war, auch bei Betätigen des Schnellspulmechnismus weiterhin eingeschaltet bleibt. Hierzu weist der Schnellspulmechanismus ein Feststellelement auf, welches das Schaltglied, wenn es sich in der Nebenstellung befindet, bei Betätigen des Schnellspulmechanismus in der Nebenstellung festhält und somit verhindert, daß das Schaltglied in die Vorzugsstellung überwechselt.
Eine derartige Anordnung läßt sich auf einfache Weise mit geringem Aufwand in Magnetbandkassettengeräte der im Oberbegriff beschriebenen Art integrieren.

Nach einer Ausgestaltung der Erfindung, bei der das Magnetband mittels Andruckrollen gegen die jeweils das Magnetband fördernde Tonwelle drückbar ist, ist vorgesehen,
- daß die Andruckrollen in einem beiden gemeinsamen, schwenkbaren Andruckrollenbügel gelagert sind,
- daß das Schwenken des Andruckrollenbügels mittels Teilen des Umschaltmechanismus erfolgt,
- daß das Betätigungselement ein auf dem Andruckrollenbügel angeordneter Nocken ist.

Weist das Magnetbandkassettengerät einen schwenkbaren Andruckrollenbügel auf, so läßt sich das Schaltglied auf einfache Weise durch einen auf dem Andruckrollenbügel angeordneten Nocken umschalten.

Nach einer weiteren Ausgestaltung der Erfindung ist vorgesehen,
- daß das Schaltglied einen Hebel mit zwei Hebelarmen aufweist,
- daß das Schaltglied von dem Betätigungselement durch dessen Einwirken auf einen der Hebelarme von der Vorzugsstellung in die Nebenstellung umschaltbar ist,
- daß das Schaltglied von dem Feststellelement durch dessen Einwirken auf den anderen Hebelarm in der Nebenstellung festsetzbar ist.

Durch die Ausbildung zweier Hebelarme ist es möglich, daß das Betätigungselement auf den einen Hebelarm und das Feststellelement auf den anderen Hebelarm einwirkt.

Nach einer weiteren vorteilhaften Ausgestaltung der Erfindung ist vorgesehen, daß das Feststellelement ein an der Schnellauftaste angeordneter Ansatz ist, der bei Betätigung der Schnellauftaste gegen einen der Hebelarme des Schaltgliedes drückt und in der Nebenstellung festsetzt, wenn das Schaltglied vor dem Betätigen des Schnellspulmechanismus die Nebenstellung eingenommen hat.

Ein solcher Ansatz läßt sich sehr einfach in einen vorhandenen Schnellspulmechanismus integrieren.

Eine bevorzugte Ausgestaltung der Erfindung ist dadurch gekennzeichnet, daß das Schaltglied in einfacher und zuverlässiger Weise durch eine Feder in Richtung auf die Vorzugsstellung belastet ist.

Die Erfindung wird nachfolgend anhand der Zeichnung näher erläutert. Es zeigen:
Fig. 1 ein Laufwerk für Magnetbandkassetten in einem Magnetbandkassettengerät in der Vorwärtsspielrichtung (NOR),
Fig. 2 das Laufwerk nach Fig. 1 in der Rückwärtsspielrichtung (REV),
Fig. 3 das Laufwerk nach Fig. 1 im Schnellvorlauf (SVL), wobei das Laufwerk vor dem Betätigen des Schnellspulmechanismus in Vorwärtsspielrichtung (NOR) betrieben wurde,
Fig. 4 das Laufwerk nach Fig. 1 im Schnellrücklauf (SRL), wobei das Laufwerk vor dem Betätigen des Schnellspulmechanismus in Vorwärtsspielrichtung (NOR) betrieben wurde,
Fig. 5 das Laufwerk nach Fig. 1 im Schnellvorlauf (SVL), wobei das Laufwerk vor dem Betätigen des Schnellspulmechanismus in Rückwärtsspielrichtung (REV) betrieben wurde,
Fig. 6 das Laufwerk nach Fig. 1 im Schnellrücklauf (SRL), wobei das Laufwerk vor dem Betätigen des Schnellspulmechanismus in Rückwärtsspielrichtung. (REV) betrieben wurde.

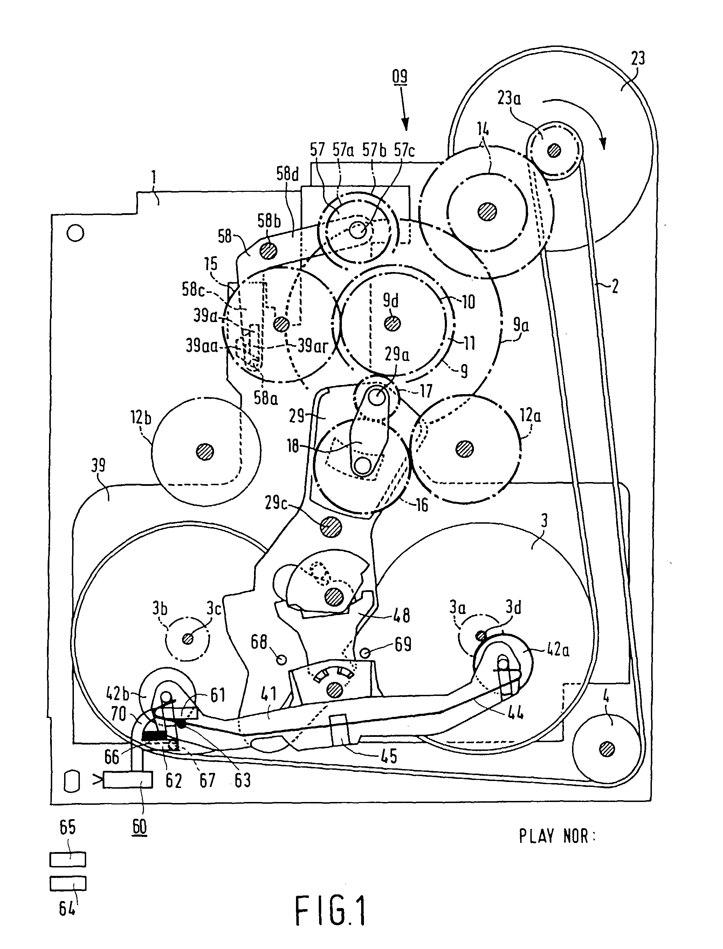

Die Fig. 1 bis 6 zeigen auf einem Chassis 1 den Antrieb der bewegten Teile des Laufwerkes in verschiedenen Betriebsstellungen. Ein Motor 23, der nur in einer Richtung umlauffähig ist, treibt über eine Peese 2 in entgegengesetzten Richtungen Schwungscheiben 3 für die Tonwellen 3c für Rückwärtsspielbetrieb (REV) und 3d für Vorwärtsspielbetrieb (NOR) an. Die Tonwellen 3c, 3d sind mit Verzahnungen 3a und 3b versehen. Die Peese 2 ist über eine Umlenkrolle 4 geführt.

Dem Antrieb eines Vorwärtswickeltellers 12a für den Vorwärtsspielbetrieb (NOR) und eines Rückwärtswickeltellers 12b für den Rückwärtsspielbetrieb (REV) dient ein Wickelgetriebe 09, welches ebenfalls von dem Motor 23 angetrieben wird. Der Motor 23 treibt hierzu mit seiner Welle 23a über ein Antriebszwischenrad 14 die Spielkupplung mit einem Antriebszahnkranz 9a eines Primärkupplungsrades 9 an, welches sich - solange sich die Motorwelle 23a dreht - ständig um eine Welle 9d dreht. Das Primärkupplungsrad 9 treibt ein konzentrisch zu ihm angeordnetes Sekundärkupplungsrad 10 über eine Schlupfkupplung 11 an. Diese kann z. B. eine Schlingfederkupplung, eine Filzkupplung oder auch eine elektromechanische Kupplung sein.

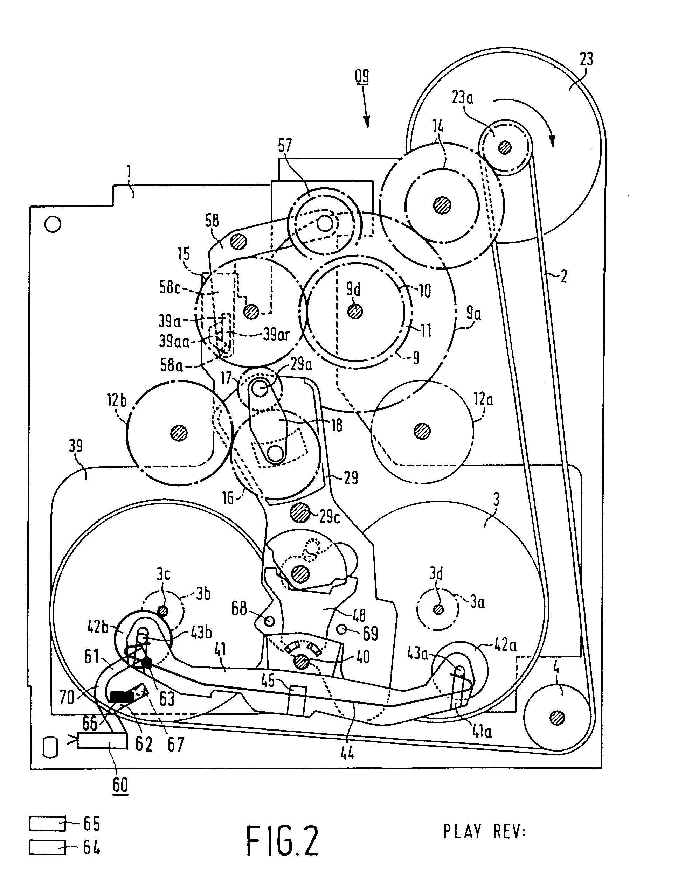

Mit dem Sekundärkupplungsrad 10 ist ein Zwischenrad 17 in Eingriff, das um eine Achse 29a eines Schalthebels 29 drehbar ist. Der Schalthebel 29, der in einer Endstellung für Vorwärtsbetrieb (NOR) oder in einer Endstellung für Rückwärtsbetrieb (REV) stehen kann und in diesen Endlagen festgelegt ist, ist in den Fig. 1, 3 und 6 im Uhrzeigersinn belastet und in den Fig. 2, 4 und 5 entgegen dem Uhrzeigersinn belastet. Das Zahnrad 17 kämmt mit einem Zahnrad 16, das bei der Darstellung nach den Fig. 1, 3 und 6 mit dem NOR-Wicketeller 12a im Eingriff ist.

Die Verzahnungskräfte wirken auf die einzelnen Zahnräder so, daß die Paarung: NOR-Wickelteller 12a/Schwenkrad 16 einziehend und die Paarung: Kupplungssekundärrad 10/ Zwischenrad 17 ausdrückend sind. Der Schalthebel 29 ist in der NOR-Stellung nach Fig. 1 durch eine nicht dargestellte Schalthebelfeder im Uhrzeigersinn belastet. Die Belastung ist dabei so groß, daß der Schalthebel 29 entgegen den Verzahnungskräften nach rechts, also im Uhrzeigersinn, in Richtung auf den NOR-Wickelteller 12a gedrückt wird.

Zu dem Wickelgetriebe 09 gehört ein Kurzschlußdoppelzahnrad 57, dessen Welle 57a auf einem doppelarmigen, um eine Achse 58b schwenkbaren Kurzschlußradhebel 58 angeordnet ist. Das Kurzschlußrad 57 kann mit dem Primärkupplungsrad 9 und dem Sekundärkupplungsrad 10 derart in Eingriff oder außer Eingriff gebracht werden, daß beim Eingriff die Kupplung 11 kurzgeschlossen und außer Eingriff die Kupplung wirksam ist. Mit Hilfe dieses Kurzschlußrades 57 können die NOR- und REV-Wickelteller 12a, 12b zum Schnellspulen auf Schnellauf geschaltet werden. Um die höhere Schnellspulgeschwindigkeit zu erhalten, ist das Übersetzungsverhältnis so gewählt, daß die Zähnezahl des Primärkupplungszahnrades 9 größer ist als die Zähnezahl des Sekundärkupplungszahnrades 10 und daß die Zähnezahl des mit dem Zahnrad 9 kämmenden Kurzschlußrades 57 kleiner ist als die Zähnezahl des mit dem Sekundärkupplungsrad 10 kämmenden Kurzschlußrades 57b.

Weiterhin gehört zu dem Wickelgetriebe 09 ein Reverserad 15, das ständig mit dem Sekundärkupplungsrad 10 kämmt. Dieses Reverserad 15 kann beim Reversebetrieb, wie er in Fig. 2 dargestellt ist, über das Zwischenrad 17 und das Schwenkrad 16 den REV-Wickelteller 12b antreiben.

Während an einem Arm des doppelarmigen Kurzschlußhebels 58 das Kurzschlußrad 57 angeordnet ist, trägt der andere Arm 58c des Kurzschlußhebels 58 einen Stellstift 58a, der in einer Leitkontur 39a des Kopfträgers 39 geführt ist. Diese Leitkontur besteht aus einer als Rundlaufführungsbahn ausgebildeten Leitkontur 39a mit einem in der Zeichnung nach links ausgebogenen, schräg ansteigenden linken Bahnteil 39aa und einem geradlinigen rechten Rücklaufbahnteil 3ar, die an ihren Enden miteinander verbunden sind. In der Leitkontur 39a kann der Stellstift 58a umlaufen. Wird der Kopfträger 39 von der Spielstellung in die Schnellspulstellung gedrückt, dann durchläuft der Stellstift 58a den linken Bahnteil 39aa, wobei der Stellstift 58a nach links gezogen wird und das Kurzschlußrad 57 gegen das Primär- und Sekundärkupplungsrad 9 und 10 schwenkt. Bleibt der Kopfträger in dieser Stellung stehen, dann schließt das Kurzschlußrad 57 das Primär- und Sekundärkupplungsrad 9, 10 miteinander kurz. Da die Übersetzung vom Primärkupplungsrad 9 zum Sekundärkupplungsrad 10 über das Kurzschlußrad so gewählt ist, daß das Sekundärkupplungsrad 10 mit größerer Geschwindigkeit umlaufen kann, läßt sich über diese Getriebeanordnung ein Schnellauf der Wickelteller 12a,12b erreichen. Dieser Schnellauf kann ein Schnellvorlauf (SVL) oder ein Schnellrücklauf (SRL) sein.

Während in Fig. 1 der Spielbetrieb in Vorwärtsrichtung dargestellt ist, zeigt Fig. 2 den Spielbetrieb in Rückwärts-(REV)-Richtung. Dabei ist in Fig. 2 zu erkennen, daß der um die Achse 29c schwenkbare Schalthebel 29 entgegen dem Uhrzeigersinn verschwenkt ist. In dieser Stellung kämmt das Zwischenrad 17 mit dem Reverserad 15. Damit erfolgt der Antrieb des REV-Wickeltellers 12b in der REV-Richtung von dem Motor 23 über dessen Welle 23a, das Antriebszwischenrad 14 und den Antriebskranz 9a des Primärkupplungsrades 9, welches ständig in gleichbleibender Richtung im Uhrzeigersinn dreht. Das Primärkupplungsrad 9 treibt über die Reibkupplung 11 das Sekundärkupplungsrad 10 an. Das Sekundärkupplungsrad 10 treibt seinerseits das Reverserad 15 an, welches dann über das Zwischenrad 17 und das Schwenkrad 16 den REV-Wickelteller 12b im dem Uhrzeigersinn dreht.

Die Verzahnungskräfte auf die einzelnen Zahnräder wirken in diesem Fall des REV-Betriebes so, daß die Paarung: REV-Wickelteller 12b/Schwenkrad 16 einziehend und die Paarung: REV-Rad 15/Zwischenrad 17 ausdrückend ist. Der Schalthebel 29 ist durch die Schalthebelfeder gegen den Uhrzeigersinn belastet. Die belastende Kraft ist dabei so hoch, daß der Schalthebel 29 entgegen den Verzahnungskräften entgegen dem Uhrzeigersinn nach links gedrückt wird.

In dem REV-Spielbetrieb nach Fig. 2 ist das Kurzschlußrad 57 von dem Primärkupplungsrad 9 und dem Sekundärkupplungsrad 10 abgehoben, so daß beide Kupplungsräder nur über die Kupplung 11, also mit Schlupfmöglichkeit miteinander in Verbindung stehen.

Zum Übergang von der einen Spielrichtung nach Fig. 1 in die andere Spielrichtung nach Fig. 2 muß der Antrieb reversiert werden. Dieser Reversiervorgang erfolgt automatisch während des Spielbetriebes oder des Bandschnellaufes jeweils am Bandende, wenn das Band stehen bleibt. Das Reversieren ist aber auch durch Tastendruck durchführbar.

Das Laufwerk weist einen Kopfträger 39 auf, der mit einem nicht dargestellten Magnetkopf versehen ist. An einer Achse 40 des Kopfträgers 39 ist symmetrisch zu den Tonwellen 3c, 3d ein Andruckrollenbügel 41 verschwenkbar gelagert. Der Andruckrollenbügel 41 erstreckt sich von der Drehachse 40 nach beiden Seiten zu den Tonwellen 3c, 3d; er hat ein U-förmiges Profil mit Rückwand und zwei abgefalzten Schenkelplatten. Der Andruckrollenbügel 41 weist an seinen Längsenden in den Schenkelplatten Längsschlitze 41a und 41b auf, in denen die Achsenden 43a und 43b der Achse 43 von Andruckrollen 42a, 42b verschieblich gelagert sind. Die Längsschlitze 41a und 41b befinden sich beiderseits von Federarmen 44a und 44b einer Andruckfeder 44.

Die Andruckfeder 44 besteht aus einem Bandstahlstreifen; sie ist nur in ihrem Mittelbereich in einem Klemmelement 45 befestigt; an ihren Enden ist sie zur Ausbildung der gabelförmigen Federarme 44a/b gespalten.

In den Längsschlitzen 41a und 41b werden die Andruckrollen 42a/b mittels der Federarme 44a/b der Andruckfeder in Richtung auf die Tonwellen 3c und 3d belastet. Die Federarme 44a/b jedes Federarmpaares 44a bzw. 44b drücken somit einzeln gegen die Achsenden 43a, 43b und justieren damit die Andruckrollen 42a, 42b. Die andrückenden Andruckfederteile 44c an den freien Enden der Federarme 44a/b sind durch hakenförmiges Zurückbiegen dieser freien Enden gebildet, womit eine Versteifung der Andruckbereiche der Federarme 44a/b erreicht wird.

An dem Andruckrollenbügel ist eine Gabel 48 vorgesehen, die zwischen den Tonwellen 3c, 3d hindurch in Richtung auf die Achse 29c des Schalthebels 29 weist. Ihre Gabelzinken 48a wirken mit einem Stellhebel 49 zusammen, der Gleitkanten 50 aufweist, die sich an den Gabelzinken 48a abgleiten können, um den Andruckrollenbügel 41 in die vorgegebene Schwenkstellung zu verschwenken. Der Stellhebel 49 ist um eine Chassislagerung 51 verschwenkbar. An dem Stellhebel 49 befindet sich noch ein Längsschlitz 53, durch den ein Stift 54 des Schalthebels 29 hindurchgreift.

Bei der Darstellung nach Fig. 1 drückt die Andruckrolle 42a gegen die Tonwelle 3d. Die Andruckrolle 42b ist von der Tonwelle 3c abgehoben. Verschwenkt der Schalthebel 29 entgegen dem Uhrzeigersinn, dann verschwenkt der Stellhebel 49, mitgenommen von dem Schalthebel 29, über den Stift 54 ebenfalls entgegen dem Uhrzeigersinn, und die Gleitkante 50 drückt gegen den rechten Gabelzinken 48a. Damit hebt sich die Andruckrolle 42a von der Tonwelle 3d ab, und die Andruckrolle 42b legt sich an die Tonwelle 3c an.

Bei einem Laufwerk, das in zwei Richtungen betrieben wird, muß bei einem Wechsel zwischen Vorwärtsspielrichtung und Rückwärtsspielrichtung der Magnetkopf von der Kanalgruppe für die Vorwärtsspielrichtung auf die Kanalgruppe für die Rückwärtsspielrichtung umgeschaltet werden. Dies erfolgt mittels eines Spurschalters 60, der einen Hebel 70 mit einem Hebelarm 61 sowie einem zweiten Hebelarm 62 aufweist. Der Spurschalter 60 ist auf nicht dargestellte Weise mit dem nicht dargestellten Magnetkopf des Magnetbandkassettengerätes elektrisch verbunden. Der Spurschalter weist zwei Schaltstellungen auf, eine Vorzugsstellung und eine Nebenstellung. Der Hebelarm 62 weist an seinem Ende einen Stift 67 auf.

Bei der Darstellung nach Fig. 1 für die Vorwärtsspielrichtung befindet sich der Spurschalter 60 in einer Vorzugsstellung. In dieser Vorzugsstellung sind im Magnetkopf die Kanäle für die Vorwärtsspielrichtung eingeschaltet. Ohne äußere Einwirkung auf die Hebelarme 61 und 62 des Spurschalters 60 nimmt dieser immer die Vorzugsstellung ein. Dies läßt sich z.B. dadurch realisieren, daß der Spurschalter 60 durch eine nicht dargestellte Feder in Richtung auf die Vorzugsstellung belastet ist.

Für die Umschaltung des Spurschalters 60 ist auf dem Andruckrollenbügel 1 ein Nocken 63 vorgesehen. Wird das Laufwerk nun von der in Fig. 1 gezeigten Vorwärtsspielrichtung in die in Fig. 2 gezeigte Rückwärtsspielrichtung umgeschaltet, dann verschwenkt der Andruckrollenbügel 41 im Uhrzeigersinn, die Andruckrolle 42a hebt sich von der Tonwelle 3d ab, und die Andruckrolle 42b legt sich an die Tonwelle 3c an. Bei diesem Verschwenken des Andruckrollenbügels 41 drückt der Nocken 63 gegen den Hebelarm 61 des Spurschalters 60 und legt diesen von der Vorzugsstellung in die Nebenstellung um. In dieser Nebenstellung sind über den Spurschalter 60 im Magnetkopf die Kanäle für die Rückwärtsspielrichtung eingeschaltet.

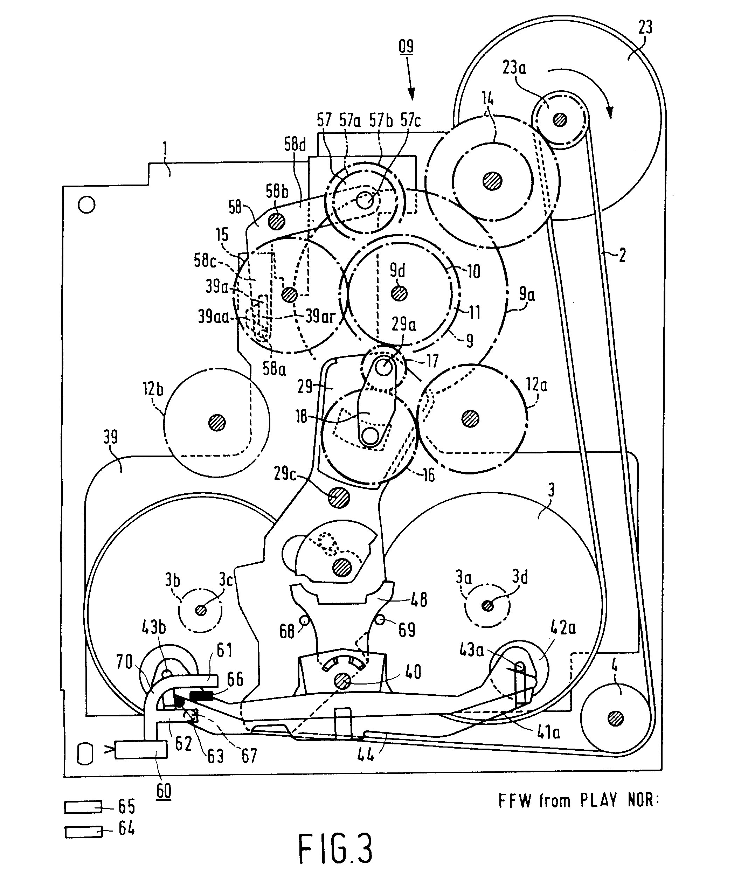

Um das Magnetbandkassettengerät mit einem Musiksuchlaufsystem (MSS) betreiben zu können, welches die Pausen zwischen auf dem Magnetband vorhandenen Aufzeichnungen feststellt, muß sichergestellt werden, daß die im Einsatz befindlichen Kanäle des Magnetkopfes mit den ausgewählten Spuren auf dem Magnetband übereinstimmen, gleichgültig, welche Laufrichtung das Magnetband bei schnellem Lauf hat. Wird im Vorwärtsspielbetrieb durch Drücken der Schnellvorlauftaste 64 der Schnellspulmechanismus für schnellen Vorlauf betätigt, so wird der Kopfträger 39 von der Spielstellung in die Schnellspulstelllung gedrückt, und der NOR-Wickelteller 12a wird, wie bereits oben beschrieben, mit Hilfe des Kurzschlußrades 57 auf Schnellauf geschaltet. Mit dem Kopfträger 39 wird auch die Achse 40, um die der Andruckrollenbügel 41 verschwenkbar gelagert ist, in die Schnellspulstellung gedrückt. In dieser Schnellspulstellung wird die Position der Gabel 48 und damit des Andruckrollenbügels 41 nicht mehr durch den Stellhebel 49 festgelegt. Vielmehr wird der Stellhebel 48 beim Zurückfahren des Kopfträgers 39 in die Schnellspulstellung gegen zwei am Chassis angelagerte Führungselemente 68 und 69 gedrückt. Die Führungselemente 68 und 69 sind so angeordnet, daß der Hebel 48 und damit der Andruckrollenbügel 41 eine Stellung einnehmen, in der die Andruckrollen 42a bzw. 42b von den Tonwellen 3d bzw. 3c in etwa den gleichen Abstand haben. Diese Stellung des Andruckrollenbügels 41 ist in Fig. 3 dargestellt. Man erkennt, daß der Nocken 63 des Andruckrollenbügels 41 den Hebelarm 61 des Spurschalters 60 nicht berührt. Durch das Betätigen des Schnellspulmechanismus für schnellen Vorlauf aus der Vorwärtsspielrichtung wird die Position des Spurschalters 60 nicht verändert, und somit bleiben im Magnetkopf die gewünschten Kanäle für die Vorwärtsspielrichtung eingeschaltet. Mit dem Drücken der Schnellvorlauftaste 64 wird auf nicht dargestellte Weise ein Ansatz 66 in Richtung auf den Spurschalter 60 bewegt. Die Funktion dieses Ansatzes 66 wird später noch näher erläutert. Bei dem Drücken der Schnellvorlauftaste 64 im Vorwärtsspielbetrieb kommt der Ansatz 66 zwischen den Hebelarmen 61 und 62 des Spurschalters 60 zu liegen. Die Schaltstellung des Spurschalters 60 wird somit von dem Ansatz 66 nicht beeinflußt.

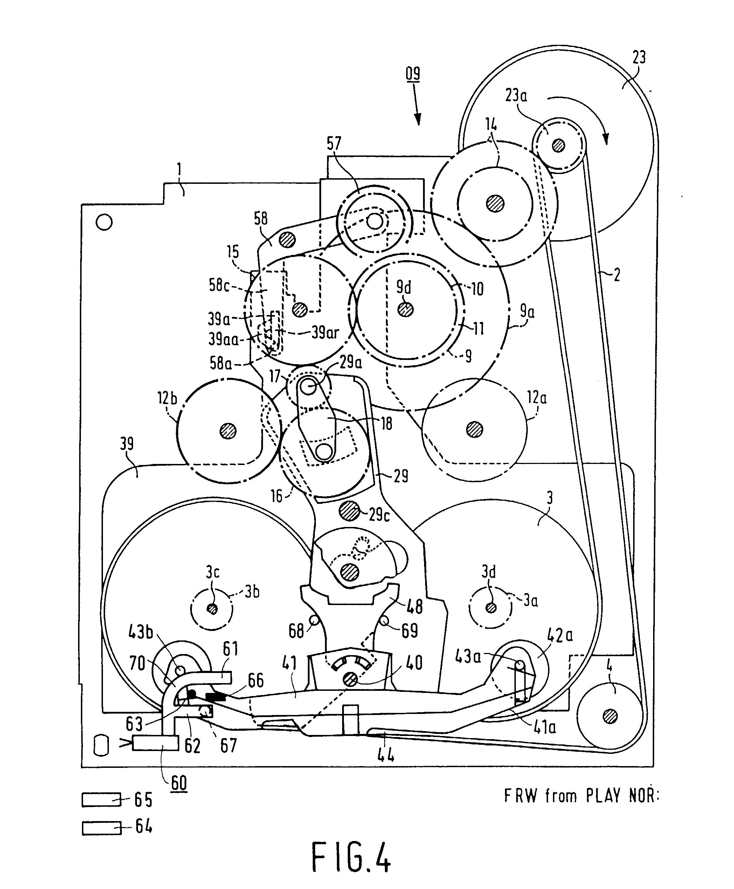

Wird die Schnellrücklauftaste 65 im Vorwärtsspielbetrieb betätigt, so muß das Laufwerk reversiert werden, d.h. das Zahnrad 16 muß durch ein Verschwenken des Schalthebels 29 im Gegenuhrzeigersinn von dem Wickelteller 12a auf den Wickelteller 12b umgelegt werden. Mit Hilfe des Kurzschlußrades 57 wird dann der Wickelteller 12b zum Schnellspulen auf Schnellauf geschaltet. Der Kopfträger 39 wird von der Spielstellung in die Schnellspulstellung und die Gabel 48 wird gegen die Führungselemente 68 und 69 gedrückt. Dadurch nimmt der Kopfträger 41 eine Stellung ein, in der die Andruckrollen 42a bzw. 42b von den Tonwellen 3d bzw. 3c in etwa denselben Abstand haben. Diese in Fig. 4 dargestellte Stellung des Kopfträgers 41 entspricht in etwa der des Kopfträgers 41 nach Fig. 3. Der Hebelarm 61 des Spurschalters 60 wird von dem Nocken 63 des Andruckrollenbügels 41 nicht berührt, und die Schaltstellung des Spurschalters 60 wird nicht verändert. Somit sind im Magnetkopf unverändert die Kanäle für die Vorwärtsspielrichtung eingeschaltet. Mit dem Drücken der Schnellrücklauftaste 65 wird auf nicht dargestellte Weise der Ansatz 66 in Richtung auf den Spurschalter 60 bewegt. Dieser Ansatz 66 kommt zwischen den Hebelarmen 61 und 62 des Spurschalters 60 zu liegen und beeinflußt somit die Stellung des Spurschalters 60 nicht.

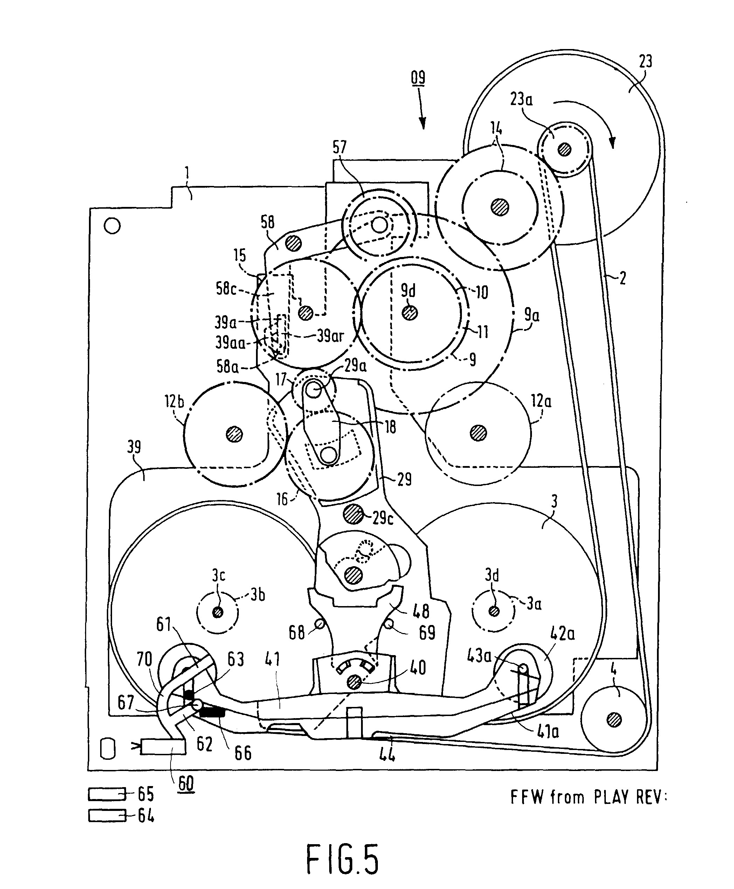

Im Rückwärtsspielbetrieb befindet sich der Spurschalter 60 in der Nebenstellung, und dementsprechend sind im Magnetkopf die Kanäle für die Rückwärtsspielrichtung eingeschaltet. Diese Kanäle für die Rückwärtsspielrichtung müssen bei Betätigen des Schnellspulmechanismus für den Musiksuchlauf eingeschaltet bleiben. Bei Betätigen der Schnellvorlauftaste 64 aus dem Rückwärtsspielbetrieb wird mit Hilfe des Kurzschlußrades 57 der REV-Wickelteller 12b zum Schnellspulen auf Schnellauf geschaltet. Der Kopfträger 39 fährt von der Spiel- in die Schnellspulstellung zurück, und die Gabel 48 wird gegen die Führungselemente 68 und 69 gedrückt. Der Andruckrollenbügel 41 nimmt gemäß Fig. 5 eine den Fig. 3 und 4 entsprechende Stellung ein, in der die Andruckrollenbügel 42a bzw. 42b von den Tonwellen 3d bzw. 3c in etwa den gleichen Abstand haben. Bei dem Zurückfahren des Kopfträgers 39 und damit des Andruckrollenbügels 41 von der Spielstellung in die Schnellspulstellung löst sich der Nocken 63, der in der Spielstellung im Rückwärtsspielbetrieb gegen den Hebelarm 61 des Spurschalters 60 gedrückt wird und diesen dort in der Nebenstellung festsetzt, von dem Hebelarm 61 des Spurschalters 60. Da der Spurschalter 60 durch eine nicht dargestellte Feder in Richtung auf die Vorzugsstellung belastet ist, würde dieser ohne weitere Maßnahmen von der Nebenstellung in die Vorzugsstellung umschalten und im Magnetkopf die Kanalgruppe für die Vorwärtsspielrichtung einschalten. Um dies zu verhindern, wird beim Drücken der Schnellvorlauftaste 64 der Ansatz 66 in Richtung auf den Spurschalter 60 bewegt. Dieser Ansatz 66 kommt dabei unter dem Hebelarm 62 des Spurschalters 60 zu liegen, wirkt auf den Stift 67 des Hebelarmes 62 ein und legt damit den Spurschalter 60 in der Nebenstellung fest. Löst sich beim Zurückfahren des Kopfträgers 39 von der Spielstellung in die Schnellspulstellung der Nocken 63 von dem Hebelarm 61, so drückt der Stift 67 des Hebelarmes 62 infolge der Federbelastung in Richtung auf die Vorzugsstellung gegen den Ansatz 66 und verhindert somit ein Umschalten des Spurschalters 60 von der Nebenstellung in die Vorzugsstellung. Wird somit aus der Rückwärtsspielrichtung in den schnellen Vorlauf geschaltet, so bleiben im Magnetkopf die Kanäle für die Rückwärtsspielrichtung eingeschaltet, und das Musiksuchlaufsystem kann die Pausen auf dem Magnetband in der gewünschten Weise detektieren.

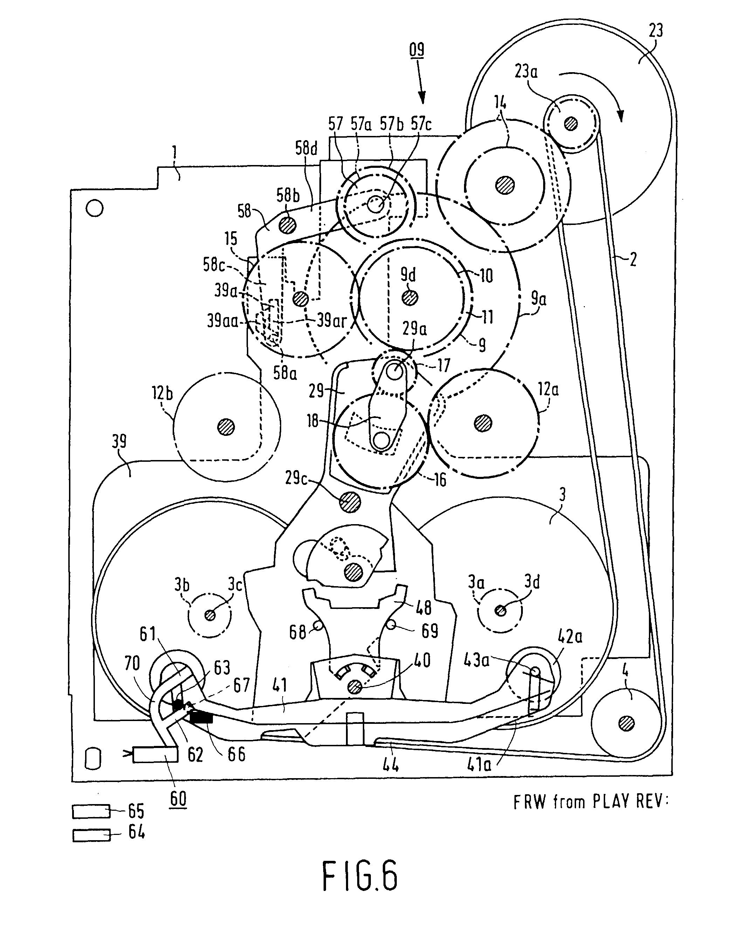

Wird im Rückwärtsspielbetrieb die Schnellrücklauftaste 65 betätigt, so muß das Laufwerk reversiert werden, d.h. das Zahnrad 16 muß durch ein Verschwenken des Schalthebels 29 im Uhrzeigersinn von dem Wickelteller 12b auf den Wickelteller 12a umgeschaltet werden. Mit Hilfe des Kurzschlußrades 57 wird dann der NOR-Wickelteller 12a zum Schnellspulen auf Schnellauf geschaltet. Mit dem Herunterfahren des Kopfträgers 39 von der Spielstellung in die Schnellspulstellung drückt der Hebel 48 gegen die Führungselemente 68 und 69, und der Kopfträger 41 nimmt gemäß Fig. 6 die bereits in den Fig. 3, 4 und 5 beschriebene Stellung ein. Beim dem Herunterfahren des Kopfträgers 39 löst sich der Nocken 63 des Schalthebels 41 von dem Hebelarm 62 des Spurschalters 60, der in der Rückwärtsspielrichtung von dem Nocken 63 in der Nebenstellung gehalten wurde. Durch Eindrücken der Schnellrücklauftaste 65 wird jedoch auf nicht dargestellte Weise der Ansatz 66 in Richtung auf den Spurschalter 60 bewegt, und zwar derart, daß er unter dem Hebelarm 62 des Spurschalters 60 zu liegen kommt. Löst sich nun der Nocken 63 von dem Hebelarm 61, so drückt Stift 67 des Hebelarmes 62 infolge der Federbelastung in Richtung auf die Vorzugsstellung gegen den Ansatz 66 und hält den Spurschalter in der Nebenstellung fest. Dadurch bleiben im Magnetkopf die Kanäle für die Rückwärtsspielrichtung eingeschaltet, und das Musiksuchlaufsystem kann in gewünschter Weise die Pausen auf dem Magnetband detektieren.

## Patentansprüche

1. Magnetbandkassettengerät mit einem Laufwerk für Magnetbandkassetten, das für Spiel- und Schnellspulbetrieb in Vorwärts- und Rückwärtsrichtung eingerichtet ist, wobei die Umschaltung zwischen Vorwärts- und Rückwärtsrichtung mittels eines Umschaltmechanismus erfolgt, der im Spiel- und Schnellspulbetrieb die Laufwerksrichtung umkehrt, mit
- einem Magnetkopf, der im Spielbetrieb am Magnetband anliegt und für das Erfassen von Aufzeichnungen in zwei Gruppen von Aufzeichnungsspuren des Magnetbandes zwei Gruppen von Kanälen aufweist,
- einem Schaltglied (60), das von einem Zustand in einen anderen umschaltbar ist, um die eine oder andere Gruppe der Kanäle im Magnetkopf in Wirkung zu setzen,
- einem Schnellspulmechanismus mit mindestens einer Schnellauftaste (64, 65),
- einer Musiksuchlaufschaltung, welche eine Pause bestimmter Minimaldauer in einer Gruppe der Aufzeichnungsspuren des Magnetbandes detektiert
dadurch gekennzeichnet,
- daß das Schaltglied (60) derart ausgebildet ist, daß es ohne äußere Einwirkung einen der beiden Zustände als Vorzugsstellung einnimmt,
- daß der Umschaltmechanismus mittels eines Betätigungselementes (63) das Schaltglied (60) beim Übergang von der einen Richtung im Spielbetrieb in die andere Richtung im Spielbetrieb von der Vorzugsstellung in eine Nebenstellung umschaltet,
- daß der Schnellspulmechanismus ein Feststellelement (66) aufweist, welches das Schaltglied (60) im Schnellspulbetrieb in der Nebenstellung festsetzt, wenn das Schaltglied (60) vor dem Betätigen des Schnellspulmechanismus die Nebenstellung eingenommen hat.

2. Magnetbandkassettengerät nach Anspruch 1, wobei das Magnetband mittels Andruckrollen (42a, 42b) gegen die jeweils das Magnetband fördernde Tonwelle (3c, 3d) drückbar ist, dadurch gekennzeichnet,
- daß die Andruckrollen (42a, 42b) in einem beiden gemeinsamen, schwenkbaren Andruckrollenbügel (41) gelagert sind,
- daß das Schwenken des Andruckrollenbügels (41) mittels Teilen des Umschaltmechanismus erfolgt,
- daß das Betätigungselement (63) ein auf dem Andruckrollenbügel angeordneter Nocken ist.

3. Magnetbandkassettengerät nach Anspruch 1 oder 2, dadurch gekennzeichnet,
- daß das Schaltglied (60) einen Hebel (70) mit zwei Hebelarmen (61, 62) aufweist,
- daß das Schaltglied (60) von dem Betätigungselement (63) durch dessen Einwirken auf einen der Hebelarme (61) von der Vorzugsstellung in die Nebenstellung umschaltbar ist,
- daß das Schaltglied (60) von dem Feststellelement (66) durch dessen Einwirken auf den anderen Hebelarm (62) in der Nebenstellung festsetzbar ist.

4. Magnetbandkassettengerät nach einem der Anspruch 3,
dadurch gekennzeichnet,
daß das Feststellelement (66) ein an der Schnellauftaste (64,65) angeordneter Ansatz ist, der bei Betätigung der Schnellauftaste (64, 65) gegen einen der Hebelarme (62) des Schaltgliedes (60) drückt und in der Nebenstellung festsetzt, wenn das Schaltglied (60) vor dem Betätigen des Schnellspulmechanismus die Nebenstellung eingenommen hat.

5. Magnetbandkassettengerät nach einem der Ansprüche 1 bis 4, dadurch gekennzeichnet,
daß das Schaltglied (60) durch eine Feder in Richtung auf die Vorzugsstellung belastet ist.

## Claims

1. A magnetic-tape-cassette apparatus comprising a deck for magnetic-tape cassettes, which deck is constructed for play and fast winding operation in a forward and a reverse direction, switching between the forward and the reverse direction being effected by means of a reversing mechanism which reverses the direction of the deck in the play and fast winding modes, comprising
- a magnetic head which lies against the magnetic tape in the play mode and which has two groups of channels for reading recordings in two groups of recording tracks of the magnetic tape,
- a switching member (60) which can be switched from one state to another in order to activate one group of channels or another group of channels in the magnetic head,
- a fast winding mechanism comprising at least one fast winding button (64, 65),
- a music search circuit which detects a pause of a given minimum duration in a group of recording tracks of the magnetic tape,
characterized in that
- the switching member (60) is adapted to assume one of said states as a preferential position without any external influence,
- the reversing mechanism switches the switching member (60) from the preferential position to a secondary position by means of an actuating element (63) upon a changeover from one direction in the play mode to the other direction in the play mode,
- the fast winding mechanism comprises a locking element (66) which locks the switching member (60) in the secondary position in the fast winding mode when the switching member occupied the secondary position prior to actuation of the fast winding mechanism.

2. A magnetic-tape-cassette apparatus as claimed in Claim 1, comprising pressure rollers (42a, 42b) capable of pressing the magnetic tape against the respective capstan (3c, 3d) which moves the magnetic tape, characterized in that
- the pressure rollers (42a, 42b) are supported on a pivotable pressure-roller support (41) common to both rollers,
- the pressure-roller support (41) is pivoted by means of parts of the reversing mechanism,
- the actuating element (63) is a projection provided on the pressure-roller support.

3. A magnetic-tape-cassette apparatus as claimed in Claim 1 or 2, characterized in that
- the switching member (60) comprises a lever (70) having two lever arms (61, 62),
- the switching member (60) is switchable from the preferential position to the secondary position in that the actuating element (63) acts upon one of the lever arms (61),
- the switching member (60) can be locked in the secondary position in that the locking element (66) acts upon the other lever arm (62).

4. A magnetic-tape-cassette apparatus as claimed in Claim 3, characterized in that the locking element (66) is a projection provided on the fast winding button (64, 65), which projection, upon actuation of the fast winding button (64, 65), is pressed against one of the lever arms (62) of the switching member (60) and locks it in the secondary position when the switching member (60) occupied the secondary position before the actuation of the fast winding mechanism.

5. A magnetic-tape-cassette apparatus as claimed in any one of the Claims 1 to 4, characterized in that
the switching member (60) is urged towards the preferential position by means of a spring.

## Revendications

1. Magnétophone à cassette à bande magnétique avec un dispositif d'entraînement pour cassettes à bande magnétique qui est destiné à un mode de lecture et de bobinage rapide en marche avant et marche arrière, la commutation entre la marche avant et la marche arrière étant assurée à l'aide d'un mécanisme de commutation qui inverse le sens du dispositif d'entraînement en mode de lecture et de bobinage rapide avec
- une tête magnétique qui est appliquée en mode de lecture sur la bande magnétique et présente deux groupes de canaux pour la détection d'enregistrements dans deux groupes de pistes d'enregistrement de la bande magnétique,
- un organe de commutation (60) qui peut être commuté d'un état dans un autre pour actionner l'un ou l'autre groupe de canaux dans la tête magnétique,
- un mécanisme de bobinage rapide avec au moins une touche d'avance rapide (64, 65),
- un circuit de recherche musicale qui détecte une pause d'une durée minimale déterminée dans un groupe de piste d'enregistrement de la bande magnétique,
caractérisé en ce
- que l'organe de commutation (60) est conçu de telle sorte qu'il adopte l'un des deux états comme position préférée sans action extérieure,
- que le mécanisme de commutation commute à l'aide d'un élément d'actionnement (63) l'organe de commutation (60) lors du passage d'une direction en mode de lecture dans l'autre direction en mode de lecture depuis sa position préférée dans une position accessoire,
- que le mécanisme de bobinage rapide présente un élément de blocage (66) qui bloque l'organe de commutation (60) en mode de bobinage rapide dans sa position accessoire lorsque l'organe de commutation (60) a adopté la position accessoire avant l'actionnement du mécanisme de bobinage rapide.

2. Magnétophone à cassette à bande magnétique selon la revendication 1, la bande magnétique étant pressée à l'aide de galets de pression (42a, 42b) contre le cabestan (3c, 3d) amenant respectivement la bande magnétique, caractérisé en ce
- que les galets de pression (42a, 42b) sont logés dans un étrier à galets de pression (41) pivotant et commun aux deux galets et
- que le pivotement de l'étrier à galets de pression (41) est assuré à l'aide de pièces du mécanisme de commutation,
- que l'élément d'actionnement (63) est un ergot disposé sur l'étrier à galets de pression.

3. Magnétophone à cassette à bande magnétique selon l'une des revendications 1 ou 2, caractérisé en ce
- que l'organe de commutation (60) présente un levier (70) avec deux bras de levier (61, 62),
- que l'organe de commutation (60) peut commuter de sa position préférée dans sa position accessoire par l'élément d'actionnement (63) du fait de son action sur l'un des bras de levier (61),
- que l'organe de commutation (60) peut être bloqué dans sa position accessoire par l'élément de blocage (66) par son action sur l'autre bras de levier (62).

4. Magnétophone à cassette à bande magnétique selon la revendication 3, caractérisé en ce
- que l'élément de blocage (66) est une saillie disposée sur la touche d'avance rapide (64, 65) qui, lors de l'actionnement de la touche d'avance rapide (64, 65), exerce une pression contre l'un des bras de levier (62) de l'organe de commutation (60) et le bloque dans la position accessoire lorsque l'organe de commutation (60) a adopté la position accessoire avant l'actionnement du mécanisme de bobinage rapide.

5. Magnétophone à cassette à bande magnétique selon l'une des revendications 1 à 4,
caractérisé en ce
que l'organe de commutation (60) est chargé par un ressort dans la direction de sa position préférée.
